# EUROPÄISCHE PATENTANMELDUNG

(11) **EP 0 708 043 A1**
(43) Veröffentlichungstag der Anmeldung: **24.04.1996**
(21) Anmeldenummer: 95115580.3
(22) Anmeldetag: 02.10.1995
(51) Int. Cl.: B65G 63/02, B65G 67/00

(54) **Transportsystem**

(30) Priorität: 18.10.1994 AT 1961/94
(71) Anmelder: JENBACHER ENERGIESYSTEME AG, A-6200 Jenbach (AT)
(72) Erfinder: Sommerer, Rudolf, A-6200 Jenbach (AT)
(74) Vertreter: Torggler, Paul, Dr.

(57) **Zusammenfassung**

Transportsystem für Ladegüter mittels schienengebundener Güterzüge, wobei entlang des Schienennetzes mehrere Verladestationen zum Ein- und Ausladen der Ladegüter vorgesehen sind. Die Verladestationen (1,2) weisen eine Einladeeinrichtung (4) zum Einlagern eines bestimmten Ladegutes (6) an eine bestimmte zugeordnete Lagerstelle (x1) im Güterzug (5) auf. Die Verladestationen (1,2) stehen über ein elektronisches Datenübermittlungssystem (7,8,9) in Verbindung, welches den Verladestationen (1,2) mitteilt, an welchen Lagerstellen (x1) die in jeweiligen Verladestationen (1,2) auszuladenden Ladegüter (6) im Güterzug (5) gelagert sind. Die Verladestationen (1,2) weisen weiters eine Entladeeinrichtung (10) auf, über die die Ladeguter (6) jeweils von den über das Datenübermittlungssystem (7,8,9) übermittelten Lagerstellen (x1) aus dem Güterzug (5) ausladbar sind.

## Beschreibung

Die Erfindung betrifft ein Transportsystem für Ladegüter mittels schienengebundener Güterzüge, wobei entlang des Schienennetzes mehrere Verladestationen zum Ein- und Ausladen der Ladegüter vorgesehen sind.

Beim Transport größerer Güter mittels Güterzügen wurden bisher die Ladegüter auf Güterwaggons aufgeteilt, die verschiedene Zielbahnhöfe haben. Um den Transport ökonomisch zu gestalten, wurde mit dem Transport häufig gewartet, bis ein Güterwaggon voll ist und erst dann der Transport vorgenommen. Außerdem erfolgte die Be- und Entladung der Güterwaggons erst nach aufwendigen Rangiermanövern auf Abstellgleisen, was die Geschwindigkeit des Gütertransports beeinträchtigt hat.

Zum Transport leichterer Güter ist es außerdem bereits bekannt diese in Gepäcksabteilen von Personenzügen mitzuführen. Allerdings ist diese Transportart für schwerere Güter, die nicht manuell gehoben werden können, in der Praxis nicht durchführbar. Außerdem ist für diesen Gütertransport ein höherer Personalaufwand nötig, da ein automationsunterstütztes Lesen der auf den Gütern angebrachten Zieladresse bisher nicht vorgesehen war.

Aufgabe der Erfindung ist es, ein neues Transportsystem für Ladegüter mittels schienengebundener Güterzüge zu schaffen, das einen raschen und kostengünstigen Gütertransport bei geringem Personalaufwand erlaubt.

Erfindungsgemäß wird dies bei einem Transportsystem der eingangs genannten Gattung dadurch erreicht, daß die Verladestationen eine Einladeeinrichtung zum Einlagern eines bestimmten Ladegutes an eine bestimmte zugeordnete Lagerstelle im Güterzug aufweisen, daß die Verladestationen über ein elektronisches Datenübermittlungssystem in Verbindung stehen, welches den Verladestationen mitteilt, an welcher bzw. welchen Lagerstelle(n) welches Güterzuges das bzw. die in jeweiligen Verladestationen auszuladenden Ladegüter im Güterzug gelagert ist (sind), und daß die Verladestationen eine Entladeeinrichtung aufweisen, über die das bzw. die Ladegüter jeweils von der bzw. den über das Datenübermittlungssystem übermittelten Lagerstelle(n) innerhalb des Güterzuges aus diesem ausladbar ist (sind).

Beim erfindungsgemäßen Transportsystem wird der Güterzug (beispielsweise ein Blockzug mit drei bis acht Güterwaggons) als rollendes Lager verwendet, in dem die Ladegüter an ihnen zugeordneten Lagerstellen gelagert sind. Diese Lagerstellen lassen sich beispielsweise in den drei Raumrichtungskoordinaten eines güterzugfesten Bezugssystems angeben. Grundsätzlich ist es nicht nötig - wenngleich auch für Notfunktionen vorteilhaft - die einzelnen Ladegüter zu kodieren. Im Transportsystem ist das Ladegut durch einen bestimmten Güterzug und eine bestimmte Lagerstelle innerhalb dieses Güterzuges definiert. Dies erlaubt es, an den Entladestationen eine rasche rechnerunterstützte und automatisierte Entladung vorzunehmen. Außerdem ist auf diese Art und Weise eine zuverlässige Verwaltung freier und besetzter Lagerstellen im Güterzug mittels Datenverarbeitungsanlagen möglich.

Insgesamt kann das erfindungsgemäße Transportsystem, was die rechnerunterstützte Verwaltung der freien und besetzten Lagerplätze anbelangt, ähnlich arbeiten wie ein computerunterstütztes Hochregallager, bei dem ebenfalls in einem Rechner abgespeichert ist, an welcher Stelle des Lagers welches Lagergut abgelegt ist. Im Gegensatz zum Hochregallager mit festen Regalen ist aber beim erfindungsgemäßen Transportsystem ein "rollendes Lager" vorgesehen, d. h. die Lagerplätze sind in fahrenden Güterzügen angeordnet, was eben den eigentlichen Gütertransport ermöglicht. Die Fördertechnik und ein allfälliges Zwischenlagern bei den Verladestationen kann wiederum unter Verwendung bei stehenden Lagern an sich bekannter und bewährter Elemente (wie beispielsweise Rollengänge und Hebezeuge sowie deren rechnerunterstützte Steuerung) erfolgen.

Weitere Vorteile und Einzelheiten der Erfindung werden anhand der nachfolgenden Figurenbeschreibung näher erläutert.
Die Fig. 1 zeigt in schematischer Darstellung zwei Verladestationen und ein Datenübermittlungssystem eines erfindungsgemäßen Transportsystems,
die Fig. 2 zeigt eine Verladestation in einer schematischen, perspektivischen Darstellung,
die Fig. 3 zeigt eine Draufsicht auf diese Verladestation,
die Fig. 4 zeigt ein Ausführungsbeispiel einer Verladestation des erfindungsgemäßen Transportsystems im Querschnitt.

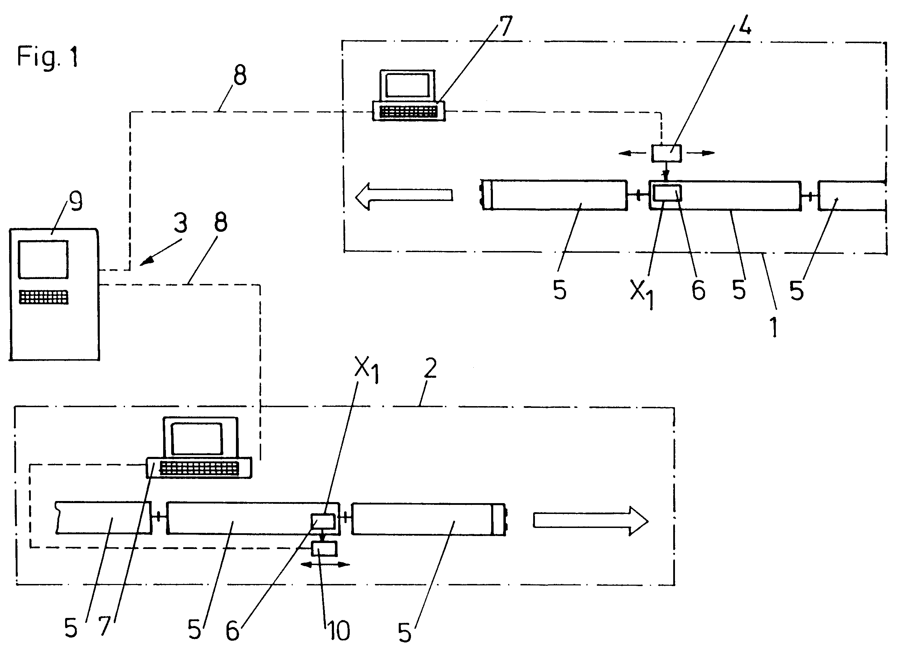

Die Fig. 1 zeigt zwei Verladestationen 1, 2 sowie ein allgemein mit 3 bezeichnetes Datenübermittlungssystem, über welches die beiden Verladestationen 1, 2 in Verbindung stehen. Die Verladestation 1 weist eine schematisch dargestellte Einladeeinrichtung 4 auf, die entlang des Güterzuges 5 verfahrbar ist und über die ein Ladegut 6 an einer freien Stelle x1 im zweiten Güterwaggon des Güterzuges einlagerbar ist. Die Einladeeinrichtung 4 kann vollautomatisch oder halbautomatisch von einem lokalen elektronischen Rechner 7 ausgesteuert sein. Jedenfalls ist aber dem Rechner 7 bekannt, an welcher Stelle (hier x1) das Ladegut 6 im Güterzug 5 angeordnet ist. Der lokale Rechner weist günstigerweise einen Speicher auf, in dem ladegutidentifizierende Daten, wie beispielsweise die Art des Ladegutes oder die Adresse des Empfängers und Absenders in fester Zuordnung mit Daten abgespeichert sind, die zumindest die Lagerstelle x1 des Ladegutes im Güterzug 5 sowie die Ausladestation (hier die Station 2) angeben. Allein über diese Zuordnung im Datenspeicher ist es möglich, in der Verladestation 2 das richtige Ladegut auszuladen. Dazu können die im lokalen Rechner 7 abgespeicherten Daten über das Netzwerk 8 in einen Zentralrechner 9 gelangen, der das gesamte Transportsystem koordiniert. Im Datenspeicher des Zentralrechners 9 können ebenfalls die ladegutidentifizierenden Daten in fester Zuordnung mit Daten abgespeichert sein, die die Lagerstelle des Ladegutes im Güterzug sowie die Ausladestation angeben. Darüberhinaus ist es günstig, wenn im Datenspeicher des Zentralrechners auch noch die folgenden Daten abgespeichert sind:
Daten, die den Güterzug identifizieren, in dem das Ladegut transport wird; die allfällige Umschlagterminals angeben, an denen das Ladegut in einen anderen Güterzug umzuladen ist; Daten betreffend Ladegutabmessungen und/oder Gewichte. Über das Netzwerk 8 ist auch dem lokalen Rechner bei der Ladestation 2 bekannt, daß im Güterzug 5 an der Stelle x1 ein in der Verladestation 2 auszuladendes Ladegut 6 vorhanden ist. Über eine vom lokalen Rechner 7 aussteuerbare Entladeeinrichtung 10 kann dieses Entladen vollautomatisch oder halbautomatisch erfolgen.

Die lokalen elektronischen Rechner können mit lokaler Intelligenz ausgestattet sein, die das Einladen und Ausladen von Ladegütern im Detail steuert, ohne den Zentralrechner 9 zu belasten. Andererseits stellen diese lokalen Rechner auch einen Teil des Datenübermittlungssystems dar, welche es den einzelnen Verladestationen 1, 2 erlauben, mit dem Zentralrechner 9 zu korrespondieren.

Als Computernetzwerke eignen sich grundsätzlich die im Handel erhältlichen üblichen Computernetzwerke, wobei auch öffentliche Datenfernübertragungsnetze, wie beispielsweise Telephon oder Datex P in die Datenübermittlung einbezogen werden können. Jedenfalls ist es beim heutigen Stand der Datenverarbeitungsanlagen problemlos möglich, zahlreiche Daten zwischen den einzelnen Verladestationen und dem Zentralrechner auszutauschen.

Beim erfindungsgemäßen Transportsystem braucht ein einzelner Güterwaggon nicht auf ein Abstellgleis abgekoppelt werden. Vielmehr kann der Zug in den Verladestationen in derselben Richtung weiterfahren, ohne daß es grundsätzlich nötig ist, Güterwaggons ab- oder anzukuppeln. Günstigerweise werden die erfindungsgemäßen Güterzüge auf den Hauptstrecken eines Schienennetzes in regelmäßigen zeitlichen Abständen (also in einem bestimmten Takt) verkehren und dabei in den einzelnen Stationen rasch Ladegüter aufnehmen bzw. abgeben. Dadurch, daß dem gesamten Transportsystem immer bekannt ist, in welchem Güterzug an welcher Stelle sich ein bestimmtes Ladegut befindet, ist eine optimierte rechnerunterstützte Verwaltung sowie ein rasches automatisiertes Aus- und Einladen möglich. Der Personalbedarf kann dabei verhältnismäßig gering gehalten werden. Die typischen Be- und Entladezeiten auf den durchgehenden Terminalgleisen sind gering, beispielsweise sind Be- und Entladezeiten in der Größenordnung von 15 bis 20 min. denkbar.

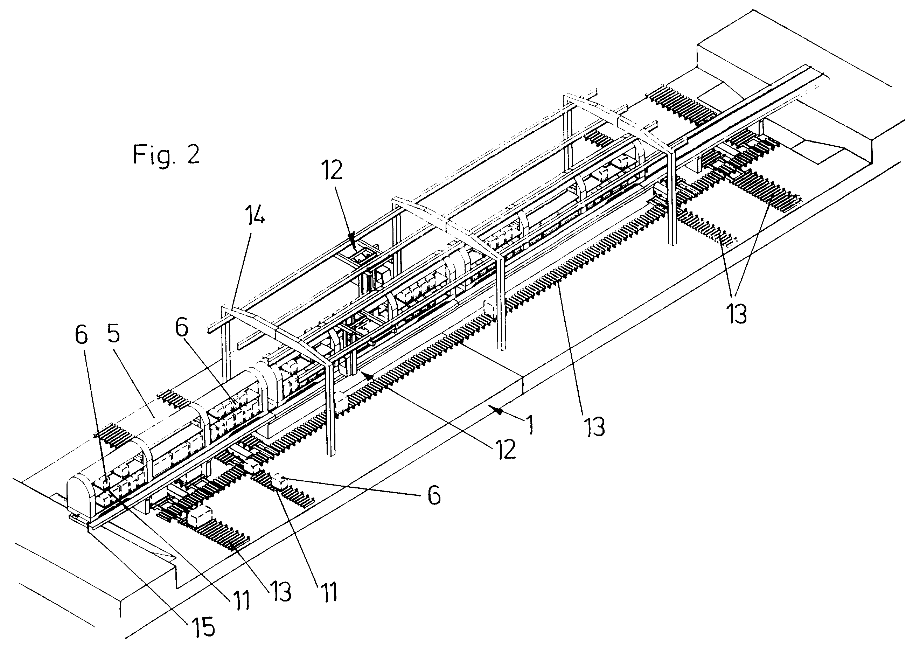

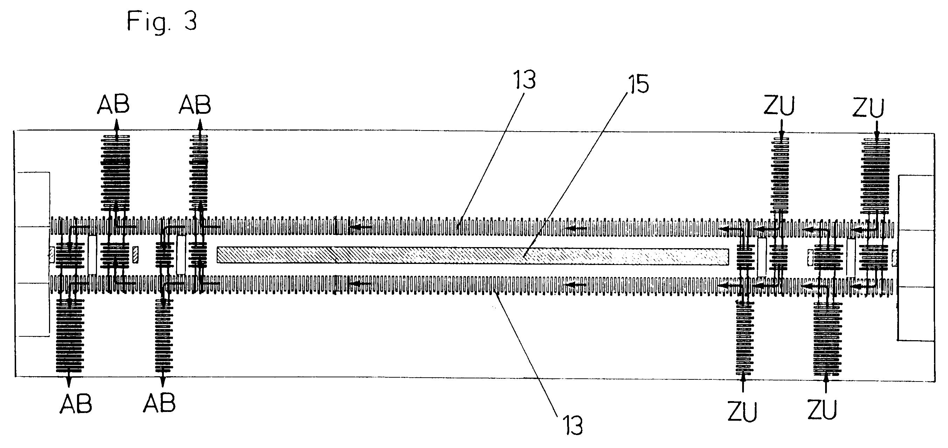

Die Fig. 2 und 3 zeigen eine Verladestation 1 in perspektivischer Ansicht bzw. in Draufsicht. Bei dem in diesen Figuren dargestellten Ausführungsbeispielen sind die Ladegüter 6 auf standardisierten Paletten, beispielsweise Europaletten angeordnet, um eine vereinfachte Manipulation zu erlauben. Die Manipulationseinrichtungen (Hebezeuge 12 zum Ein- und Ausladen in den Güterwaggon sowie die Förderer 13 neben dem Bahnsteig) greifen an diesen standardisierten Paletten an und können diese daher mit relativ einfachen mechanischen Mitteln sicher bewegen.

Die Einladeeinrichtung und die Entladeeinrichtung derselben Verladestation weisen günstigerweise gemeinsame Manipulationseinrichtungen 12, 13 für das Lagergut 6 bzw. deren Paletten 11 auf, wobei die Manipulationseinrichtungen 12, 13 wahlweise zum Einlagern oder Ausladen von Ladegut 6 verwendet werden. So können die Förderer 13 einerseits zum Heranfördern von Ladegut an den Güterzug 5 als auch zum Wegfördern von ausgeladenem Fördergut verwendet werden. Auch die auf dem Hubgerüst 14 entlang des Zuges verfahrbaren höhenverstellbaren Hebezeuge können sowohl zum Ausladen als auch zum Einladen verwendet werden. Im allgemeinen wird man zunächst das Entladen vornehmen, um freie Plätze im Güterzug 5 zu schaffen. Danach können über dieselben Einrichtungen neue Ladegüter eingeladen werden.

Um die Verladegeschwindigkeit zu erhöhen, ist es günstig, beiderseits des Gleises 15 für den Güterzug 5 Manipulationseinrichtungen 12, 13 zum Einlagern und Ausladen von Ladegut 6 sowie zum Transport von Ladegut 6 vom und zum Güterzug 5 vorzusehen.

Die Manipulationseinrichtungen für das Ladegut 6 weisen günstigerweise elektronisch gesteuerte Hebezeuge 12 auf, die mit in den Güterwaggon einfahrbaren Gabeln zur Aufnahme der Paletten 11 ausgestattet sein können. Die Hebezeuge sind beispielsweise über einen lokalen Rechner (vgl. Bezugsziffer 7 in Fig. 1) automatisch an eine bestimmte vom Datenübermittlungssystem bzw. vom Zentralrechner 9 vorgebbare Stelle vor dem Güterzug 5 bewegbar. Damit kann zunächst eine grobe Bewegung der Hebezeuge an die Einlade- bzw. Ausladestelle erfolgen.

Um die Anfahrgenauigkeit der Hebezeuge 12 zu verbessern, können verschiedene Maßnahmen getroffen werden: Einmal ist es möglich, daß die Manipulationseinrichtung für das Ladegut eine Meßeinrichtung zum Feststellen der tatsächlichen Höhenlage der Regaletagen im Güterzug 5 aufweist, auf denen sich die Ladegüter bzw. Paletten befinden. Beim dargestellten Ausführungsbeispiel weist der Güterzug 2 solche Regaletagen auf. Die Höhenmessung kann beispielsweise optisch, induktiv oder kapazitiv erfolgen. Die Positionierung des Güterzuges in Längsrichtung kann über akustische und optische Signaleinrichtungen erfolgen, die dem Lokführer des Güterzuges den Anhaltepunkt anzeigen. Damit ist es diesem möglich, auf ± 1 m genau anzuhalten. Die exakte Lage des Anhaltepunktes des Güterzuges kann dann über eine Meßeinrichtung, beispielsweise über eine Serie von Lichtschranken erfolgen und damit der Manipulationseinrichtung bekannt sein. Mit diesen Meßeinrichtungen ist es der Manipulationseinrichtung grundsätzlich sogar möglich, Paletten mit Ladegut vollautomatisch in den Güterzug einzuladen bzw. auszuladen. Allerdings sind dann höhere Anforderungen an die Genauigkeit des Systems und an die Qualität der Paletten etc. zu stellen. Um hier etwas geringere Anforderungen stellen zu können, ist es günstig, das Hebezeug halbautomatisch auszubilden. Das Hebezeug fährt dann automatisch gesteuert vom lokalen Rechner ziemlich genau die Einlade- bzw. Ausladeposition an, d.h. die Ladegabeln des Hebezeuges werden vor der auszuladenden Palette positioniert. Ein mit dem Hebezeug mitfahrender Bedienungsmann in einer Bedienstation kann nun händisch gesteuert die Ladegabeln exakt einfahren und dabei geringfügige Fehlpositionierungen ausgleichen. Auch bei Beschädigungen der Paletten und anderen Störfällen kann der Bedienungsmann händisch eingreifen.

Die Transportbehältnisse mit durchgehender ebenflächiger Grundfläche können beispielsweise folgende Flächenabmessungen haben: Paletten nach DIN 15141, 15146 und 15148 mit den Grundflächen 800 x 1000 mm, 800 x 1200 mm, 1000 x 1200 mm, 1200 x 1600 mm, 1200 x 2000 mm und 1200 x 2400 mm. Die maximale Höhe der Transportbehältnisse (Paletten mit Ladegut oder Container) welche ohne Einschränkungen umschlagbar sind ca. 1900 mm, Sondertransporte mit einer maximalen Behälterhöhe von bis zu 3000 mm sind möglich. Allerdings ist dann ein Umsetzen von einer auf die andere Beladeseite des Güterzuges mittels eines Hubstaplers nötig. Die Grundfläche der Transportbehältnisse der Paletten ist vorzugsweise aus Holz oder holzähnlichem Kunststoff bzw. aus Recyclingmaterial hergestellt, wobei der Grundrahmen der Transportbehältnisse günstigerweise so ausgebildet ist, daß er mit einer üblichen Staplergabel bzw. einer entsprechenden Gabel an den Hebezeugen eingefahren werden kann (insbesondere Europalettenmaße).

Zum An- oder Abtransport der Ladegüter neben dem Güterzug 5 sind seitlich neben dem Gleis 15 Fördereinrichtungen vorgesehen. Beim dargestellten Ausführungsbeispiel ist ein Förderrollengang 13 mit angetriebenen Rollen vorgesehen. Günstigerweise befinden sich die Fördereinrichtungen 13 unter der Schienenoberkante der Gleise 15 (beim dargestellten Ausführungsbeispiel beispielsweise 2500 mm unter der Schienenoberkante). Dies ermöglicht es u.a. über quer zum Gleis 15 verlaufende Abschnitte der Fördereinrichtung unter dem Gleis 15 hindurch auf die andere Seite des Gleises zu kommen. Dies ermöglicht eine einfache Zu- und Abfuhr der Ladegüter auf beiden Seiten des Güterzuges, so wie dies in Fig. 3 dargestellt ist, wo neben einer Zu- und Abfuhr auf Lastkrafwagen auch eine Zu- und Abfuhr zu einem Umschlag-Zwischenlager vorgesehen ist.

Wie die Fig. 2 zeigt, ist die Aktionslänge der Manipulationseinrichtung 12, 13 der Verladestation 1 kürzer als der ganze Güterzug. Er umfaßt beim dargestellten Ausführungsbeispiel zwei Güterwaggons. Nach dem Be- und Entladen dieser zwei Güterwaggons kann dann der Zug gegebenenfalls um zwei Waggons vorgefahren werden, um die nächsten zwei Güterwaggons zu entladen bzw. zu beladen. Es können auch mit Abstand hintereinander mehrere solche Manipulationseinrichtungen vorgesehen sein, um zunächst beispielsweisen den ersten und zweiten sowie den fünften und sechsten Waggon zu entladen bzw. zu beladen und nach dem Vorfahren um zwei Waggons den dritten und vierten sowie den siebten und achten Waggon zu be- bzw. zu entladen.

Das in Fig. 3 angedeutete Zwischenlager kann an größeren Verladestationen verwendet werden, um Ladegut kurzzeitig aufzunehmen, bevor es auf einen anderen Güterzug aufgeladen wird. Es handelt sich dabei also vorzugsweise um ein reines kurzzeitiges Umschlag-Zwischenlager.

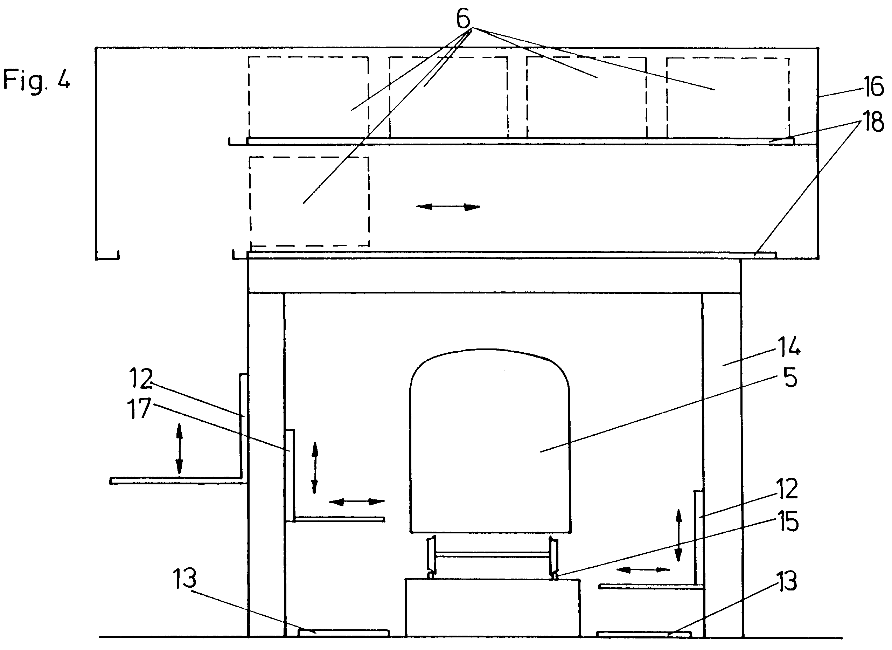

Ein solches Zwischenlager 16 kann platzgünstig oberhalb des Gleises 15 auf Trägern 14 angeordnet sein, wobei sich die Träger des Zwischenlagers 16 vorzugsweise beiderseits des Gleises 15 am Boden abstützen, wie dies in Fig. 4 gezeigt ist. Die Träger 14 können gleichzeitig zur Lagerung der höhenverstellbaren und in Zuglängsrichtung verfahrbaren Hebezeuge 12 dienen. Außerdem kann an ihnen eine Fördereinrichtung 17 zum Be- und Entladen des Zwischenlagers 16 vorgesehen sein. Im Zwischenlager selbst können beispielsweise am Boden wieder Rollengänge 18 angeordnet sein. Auch die Ablagerung im Zwischenlager kann rechnerunterstützt erfolgen, wobei dem Rechner bekannt ist, an welcher Stelle des Zwischenlagers welches Ladegut zwischengelagert ist.

Grundsätzlich funktioniert das erfindungsgemäße Transportsystem auch ohne Abspeicherung von Daten im Güterzug bzw. an den einzelnen Ladegütern. Für Notfälle, insbesondere Ausfälle des Datenübermittlungssystems kann es aber günstig sein, wenn zusätzlich Daten am Güterzug selbst zur Verfügung stehen. Einmal besteht dabei die Möglichkeit, daß jeder Güterwaggon bzw. Güterzug einen Datenspeicher aufweist, in welchem zumindest Daten abgespeichert sind, die das eingelagerte Ladegut identifizieren sowie die zugehörige Lagerstelle im Güterzug angeben. Zusätzlich können in diesem Datenspeicher auch noch Daten abgespeichert sein, die den Güterzug identifizieren, die ein allfälliges Umschlagterminal und die Ausladestation angeben. Weitere Daten bezüglich der Ladegutabmessungen und Gewichte können ebenfalls abgespeichert sein. Mit solchen Daten ist es selbst bei einem Ausfall des zentralen Datenübermittlungssystems möglich, zumindest eine Entladung der Güterzüge vorzunehmen.

Neben der Möglichkeit, diese Daten im Güterzug bzw. Gütervaggon zu speichern, besteht auch die Alternative oder zusätzliche Möglichkeit, alle Ladegüter bzw. deren Paletten oder Container einzeln zu codieren, wobei der Code zumindest die Lagerstelle im Güterzug und die Ausladestation angibt. Auch der Code kann weitere Informationen enthalten. Der Code kann auch im Normalbetrieb verwendet werden, um das Erkennen des richtigen Ladegutes zu kontrollieren. Dabei ist es günstig, wenn die Manipulationseinrichtungen an den Verladestellen eine Leseeinrichtung für den Code aufweisen.

## Patentansprüche

1. Transportsystem für Ladegüter mittels schienengebundener Güterzüge, wobei entlang des Schienennetzes mehrere Verladestationen zum Ein- und Ausladen der Ladegüter vorgesehen sind, dadurch gekennzeichnet, daß die Verladestationen (1,2) eine Einladeeinrichtung (4) zum Einlagern eines bestimmten Ladegutes (6) an eine bestimmte zugeordnete Lagerstelle (x1) im Güterzug (5) aufweisen, daß die Verladestationen (1,2) über ein elektronisches Datenübermittlungssystem (7,8,9) in Verbindung stehen, welches den Verladestationen (1,2) mitteilt, an welcher bzw. welchen Lagerstelle(n) (x1) welches Güterzuges (5) das bzw. die in jeweiligen Verladestationen (1,2) auszuladenden Ladegüter (6) im Güterzug (5) gelagert ist (sind), und daß die Verladestationen (1,2) eine Entladeeinrichtung (10) aufweisen, über die das bzw. die Ladegüter (6) jeweils von der bzw. den über das Datenübermittlungssystem (7,8,9) übermittelten Lagerstelle(n) (x1) innerhalb des Güterzuges (5) aus diesem ausladbar ist (sind).

2. Transportsystem nach Anspruch 1, dadurch gekennzeichnet, daß die Ladegüter (6) auf standardisierten Paletten (11), vorzugsweise Europaletten, und/oder in standardisierten Containern transportiert werden und die Ein- und Entladeeinrichtungen an den Paletten oder Containern angreifende Manipulationseinrichtungen, insbesondere Förderer (13) und Hebezeuge (12), aufweisen.

3. Transportsystem nach Anspruch 1 oder 2, dadurch gekennzeichnet, daß die Einladeeinrichtung und die Entladeeinrichtung derselben Verladestation gemeinsame Manipulationseinrichtungen (12,13) für das Lagergut (6) bzw. deren Paletten (11) oder Container aufweisen, wobei die Manipulationseinrichtungen (12,13) wahlweise zum Einlagern oder Ausladen von Ladegut (6) verwendet werden.

4. Transportsystem nach einem der Ansprüche 1 bis 3, dadurch gekennzeichnet, daß die Verladestation beiderseits des Gleises für den Güterzug Manipulationseinrichtungen (12,13) zum Einlagern und Ausladen von Ladegut (6) sowie zum Transport von Ladegut (6) vom und zum Güterzug (5) aufweisen.

5. Transportsystem nach einem der Ansprüche 1 bis 4, dadurch gekennzeichnet, daß die Manipulationseinrichtungen für das Ladegut (6) elektronisch gesteuerte Hebezeuge (12) aufweisen, welche automatisch eine bestimmte, vom Datenübermittlungssystem (7,8,9) vorgebbare Stelle vor dem Güterzug (5) anfahren.

6. Transportsystem nach Anspruch 5, dadurch gekennzeichnet, daß die Hebezeuge (12) in Zuglängsrichtung und in vertikaler Richtung bewegbar sind.

7. Transportsystem nach Anspruch 5 oder 6, dadurch gekennzeichnet, daß das Hebezeug eine mitfahrende Bedienstation für einen Bedienungsmann aufweist, wobei in den Güterzug einfahrbare Ladegabeln od.dgl. von der Bedienstation aus steuerbar sind.

8. Transportsystem nach einem der Ansprüche 1 bis 7, dadurch gekennzeichnet, daß die Manipulationseinrichtung für das Ladegut eine Meßeinrichtung zum Feststellen der tatsächlichen Höhenlage der Regal-Etage(n) im Güterzug aufweist, auf der (denen) die Ladegüter bzw. deren Paletten oder Container aufliegen.

9. Transportsystem nach einem der Ansprüche 1 bis 8, dadurch gekennzeichnet, daß die Manipulationseinrichtung für das Ladegut eine Meßeinrichtung zum Feststellen des tatsächlichen Anhaltepunktes des Güterzuges aufweist.

10. Transportsystem nach einem der Ansprüche 1 bis 9, dadurch gekennzeichnet, daß akustische und/oder optische Signaleinrichtungen vorgesehen sind, um dem Lokführer des Güterzuges den Anhaltepunkt anzuzeigen.

11. Transportsystem nach einem der Ansprüche 1 bis 10, dadurch gekennzeichnet, daß seitlich neben dem Gleis zumindest eine Fördereinrichtung (13), vorzugsweise ein Förderrollengang mit angetriebenen Rollen vorgesehen ist.

12. Transportsystem nach Anspruch 11, dadurch gekennzeichnet, daß die Fördereinrichtung(en) unter der Schienenoberkante der Gleise liegen.

13. Transportsystem nach Anspruch 12, dadurch gekennzeichnet, daß die Auflagefläche der Fördereinrichtung(en) für das Ladegut in etwa 2500 mm unter der Schienenoberkante liegt.

14. Transportsystem nach einem der Ansprüche 1 bis 13, dadurch gekennzeichnet, daß die Fördereinrichtung(en) zumindest einen quer zum Gleis (15) verlaufenden Abschnitt aufweisen.

15. Transportsystem nach Anspruch 14, dadurch gekennzeichnet, daß zumindest ein quer zum Gleis (15) verlaufender Abschnitt unter dem Gleis (15) durch auf die andere Seite des Gleises verläuft.

16. Transportsystem nach einem der Ansprüche 1 bis 15, dadurch gekennzeichnet, daß die Manipulationseinrichtung (12,13) der Verladestationen (1) eine Aktionslänge aufweist, die kürzer als der ganze Güterzug ist und vorzugsweise die Länge zweier Güterwaggons umfaßt.

17. Transportsystem nach einem der Ansprüche 1 bis 16, dadurch gekennzeichnet, daß zumindest ein Teil der Verladestationen ein Zwischenlager (16) für Ladegüter aufweist.

18. Transportsystem nach Anspruch 17, dadurch gekennzeichnet, daß das Zwischenlager auf Trägern zumindest teilweise oberhalb des Gleises (15) angeordnet ist, wobei sich die Träger des Zwischenlagers (16) vorzugsweise beiderseits des Gleises (15) am Boden abstützen.

19. Transportsystem nach Anspruch 17 oder 18, dadurch gekennzeichnet, daß Fördereinrichtungen (17) für das Ladegut vom Güterzug zum Zwischenlager (und umgekehrt) führen.

20. Transportsystem nach einem der Ansprüche 1 bis 19, dadurch gekennzeichnet, daß das Datenübermittelungssystem zumindest einen Speicher aufweist, in dem ladegutidentifizierende Daten in fester Zuordnung mit Daten, die zumindest die Lagerstelle (x1) des Ladegutes (6) im Güterzug (5), sowie die Ausladestation (2) angeben, abgespeichert sind.

21. Transportsystem nach Anspruch 20, dadurch gekennzeichnet, daß im Speicher weiters zumindest ein Teil der folgenden Daten abgespeichert sind:
- Daten, die den Güterzug identifizieren, in dem das Ladegut transportiert wird,
- Daten, die allfällige Umschlagterminals angeben, an denen das Ladegut in einen anderen Güterzug umzuladen ist,
- Daten betreffend Ladegutabmessungen und/oder Gewichte.

22. Transportsystem nach einem der Ansprüche 1 bis 20, dadurch gekennzeichnet, daß das Datenübermittlungssystem einen elektronischen Zentralrechner (9) aufweist, der über ein Netzwerk (8) mit zumindest einem lokalen elektronischen Rechner (7) an jeder Verladestation (1,2) vernetzt ist.

23. Transportsystem nach einem der Ansprüche 1 bis 22, dadurch gekennzeichnet, daß jeder Güterzug oder jeder Güterwaggon des Güterzuges einen Datenspeicher aufweist, in welchem Daten abgespeichert sind, die zumindest die momentan eingelagerten Ladegüter identifizieren, sowie deren Lagerstelle im Güterzug und deren Ausladestation angeben.

24. Transportsystem nach Anspruch 23, dadurch gekennzeichnet, daß im Datenspeicher weiters zumindest ein Teil der folgenden Daten abgespeichert sind:
- Daten, die den Güterzug identifizieren, in dem das Ladegut transportiert wird,
- Daten, die allfällige Umschlagterminals angeben, an denen das Ladegut in einen anderen Güterzug umzuladen ist,
- Daten betreffend Ladegutabmessungen und/oder Gewichte.

25. Transportsystem nach einem der Ansprüche 1 bis 24, dadurch gekennzeichnet, daß alle Ladegüter bzw. deren Paletten oder Container einzeln kodiert sind, wobei der Code zumindest die Lagerstelle im Güterzug und die Ausladestation angibt.

26. Transportsystem nach Anspruch 25, dadurch gekennzeichnet, daß der Code weiters zumindest einen Teil der folgenden Daten enthält:
- Daten, die den Güterzug identifizieren, in dem das Ladegut transportiert wird,
- Daten, die allfällige Umschlagterminals angeben, an denen das Ladegut in einen anderen Güterzug umzuladen ist,
- Daten betreffend Ladegutabmessungen und/oder Gewichte.

27. Transportsystem nach Anspruch 25 oder 26, dadurch gekennzeichnet, daß die Manipulationseinrichtungen an den Verladestellen eine Leseeinrichtung für den Code aufweisen.

28. Transportsystem nach einem der Ansprüche 1 bis 27, dadurch gekennzeichnet, daß der Güterzug (5) von beiden Seiten aus beladbar bzw. entladbar ist.

29. Transportsystem nach einem der Ansprüche 1 bis 28, dadurch gekennzeichnet, daß der Güterzug (5) eine oder zwei übereinanderliegende Lageretagen aufweist.
